# EUROPÄISCHE PATENTSCHRIFT

(11) **EP 1 200 768 B1**
(45) Veröffentlichungstag und Bekanntmachung des Hinweises auf die Patenterteilung: **26.05.2004**
(21) Anmeldenummer: 00958146.3
(22) Anmeldetag: 13.07.2000
(51) Int. Cl.: F17C 1/16

(54) **DRUCKBEHÄLTER UND VERFAHREN ZU SEINER HERSTELLUNG**
PRESSURISED TANK AND METHOD FOR MAKING SAME
RESERVOIR SOUS PRESSION ET SON PROCEDE DE PRODUCTION

(30) Priorität: 07.08.1999 DE 19937470
(43) Veröffentlichungstag der Anmeldung: 02.05.2002
(73) Patentinhaber: Funck, Ralph, 67661 Kaiserslautern (DE)
(72) Erfinder: FUNCK, Ralph, D-67661 Kaiserslautern (DE); HAUSMANN, Joachim, D-67555 Kaiserslautern (DE)
(74) Vertreter: Weber, Dieter, Dr.
(86) Internationale Anmeldenummer: PCT/DE2000/002326
(87) Internationale Veröffentlichungsnummer: WO 2001/011284

(56) Entgegenhaltungen:
- EP-A- 0 333 013
- EP-A- 0 635 672
- EP-A- 0 810 081
- US-A- 5 644 919

## Beschreibung

Die vorliegende Erfindung betrifft einen Druckbehälter zur Speicherung fester, flüssiger und/oder gasförmiger Medien unter einem Betriebsdruck oberhalb des Atmosphärendruckes, wobei der Druckbehälter einen zur Speicherung des Mediums vorgesehenen Hohlraum umschließt und mindestens einen Anschluß zum Be- und/oder Entladen aufweist.

Derartige Druckbehälter sind im Stand der Technik in vielfältigen Ausführungsformen bekannt und sie müssen den mechanischen Beanspruchungen durch Innen- bzw. Außendruck, sowie den weiteren mechanischen, physikalischen (Temperatur) und chemischen Belastungen standhalten. Ein gängiges Material zur Herstellung entsprechender Druckbehälter ist Stahl. Stahlbehälter bestehen zumeist aus einem zylindrischen Tank mit einer Bodenplatte oder -kappe und einem Deckel, der im allgemeinen ähnlich ausgebildet ist wie eine entsprechende Bodenkappe, insbesondere wenn der Druckbehälter in horizontaler Lage (mit horizontaler Achse) aufbewahrt bzw. gehaltert wird.

Solche Stahlbehälter haben grundsätzlich den Vorteil einer hohen mechanischen Festigkeit und damit einer hohen Druckfestigkeit und auch einer guten Temperaturbeständigkeit. Dagegen ist die chemische Beständigkeit von Stahl gegenüber korrosiven Substanzen eher schlecht und aus diesem Grunde sind Stahlbehälter im allgemeinen nicht für die Aufnahme chemisch aggressiver Medien geeignet, oder aber sie müssen eine aufwendige innere Beschichtung erhalten. Auch gegenüber äußeren Witterungseinflüssen sind Stahlbehälter relativ anfällig, so daß eine zusätzliche äußere Beschichtung bzw. Lackierung vorgesehen werden muß. Schließlich haben Stahlbehälter ein relativ hohes Gewicht und die Herstellung durch Zusammenschweißen von Deckeln und zylindrischem Hauptteil ist relativ aufwendig.

Falls statt Stahl ein anderes Metall verwendet wird, welches eine bessere chemische Beständigkeit und Korrosionsfestigkeit aufweist, so sind diese anderen Metalle häufig teuerer, schwerer zu verarbeiten oder beides.

Auch Druckbehälter aus Faserkunststoffverbunden mit duromeren Matrixsystemen sind bereits bekannt.

Als Beispiel befaßt sich das europäische Patent EP-0.810.081 A1 mit einem "Pressure Vessel and Method of Manufacturing Same". Hierbei wird beschrieben, wie eine geschlossene Hüllschicht, die aus Kunststoff besteht, im Faserwickelverfahren mit einem Faserkunststoffverbund umhüllt wird. Ein ähnliches Behälterprinzip wird im europäischen Patent EP-0.333.013 A1 "Pressure Vessels" beschrieben. Auch in diesem Falle wird eine Hüllschicht mit Fasern derart umgeben, daß die Verstärkungshülse den mechanischen Beanspruchungen standhält.

Die internationale Veröffentlichung WO 92/20954 "glass-fibre-reinforced plastic container, method and apparatus for manufacturing such container" beschreibt einen glasfaserverstärkten Behälter und ein Verfahren zu dessen Herstellung, wobei sich der Behälter aus zwei Halbschalen zusammensetzt, die im zylindrischen Bereich durch Verkleben miteinander verbunden werden. Die Halbschalen werden im Harzinjektionsverfahren anhand von Formwerkzeugen hergestellt, wobei duromere Kunststoffe eingesetzt werden. Aufgrund der Halbschalentechnik ist eine Variation der Behälterlängen nur mit hohem Aufwand (neues Werkzeug) möglich.

Andere bekannte Bauarten sehen den Einsatz von Hülsen aus Faserkunststoffverbund vor, die in Teilbereichen an einer Hüllschicht angeordnet sind, wobei die Faserausrichtung der Hülse vornehmlich in Umfangsrichtung erfolgt. Die Hüllschicht nimmt dabei die entstehenden Kräfte in Längsachse des Behälters auf, während die Hülse die Kräfte in Umfangsrichtung des Behälters aufnimmt.

Die als nächstliegender Stand der Technik anzusehende 39 22 577 A1 offenbart einen Druckluftbehälter aus faserverstärktem Kunststoff, der einen zylindrischen Mittelabschnitt und zwei durch Klebung längs eines Überlappungsbereichs damit verbundene Deckel aufweist. Der Mittelabschnitt ist dabei ein Wickelteil und die Deckel sind Preßteile.

Alle bisher bekannten Bauarten und Herstellungsmethoden von Kunststoffdruckbehältem sind entweder zu aufwendig und damit zu kostenintensiv in der Herstellung, halten den Anforderungen bezüglich Dichtigkeit oder mechanischer Beanspruchung nicht stand, sind zu schwer oder weisen optisch ungenügende Außenoberflächen auf. Fertigungsbedingt sind zudem bei den meisten Druckbehältem die Anschlüsse zum Be- und/oder Entladen zentrisch am Behälterboden angebracht.

Gegenüber diesem Stand der Technik liegt der vorliegenden Erfindung die Aufgabe zugrunde, einen Druckbehälter zu schaffen, der relativ einfach herzustellen ist, ein geringes Gewicht und eine sehr gute Korrosionsfestigkeit und Widerstandsfähigkeit gegen chemisch aggressive Medien hat, dabei aber dennoch den mechanischen Belastungen durch die üblichen hohen Betriebsdrücke bis zu 25 Mpa standhält.

Diese Aufgabe wird dadurch gelöst, daß der Druckbehälter im Wesentlichen aus einem einlagigen Rohr besteht, welches wiederum aus faserverstärkten, thermoplastischen Kunststoff hergestellt ist und welches mit Deckeln versehen ist, die die offenen Stirnseiten des Rohres verschließen, so daß das einlagige Rohr mit den Deckeln einen zur Speicherung des Mediums vorgesehenen Hohlraum umschließt, wobei mindestens ein Anschluß zum Be- und/oder Entladen vorgesehen ist, wobei das thermoplastische Material, aus welchem das einlagige Rohr hergestellt ist, zu mehr als 10 Volumenprozent aus Fasern mit einer durchschnittlichen Faserlänge von mehr als 50 mm besteht.

Faserverstärkte thermoplastische Kunststoffe und deren Anwendung auf verschiedenen technischen Gebieten sind seit langem bekannt. Für Druckbehälter sind derartige faserverstärkte, thermoplastische Kunststoffe bisher nicht oder jedenfalls nicht in nennenswertem Umfang verwendet worden. Zwar haben die bekannten faserverstärkten, thermoplastischen Kunststoffe je nach Auswahl des thermoplastischen Materials den Vorteil einer gewissen chemischen Beständigkeit und Korrosionsfestigkeit, allerdings waren bisher die mechanischen Eigenschaften der üblicherweise verwendeten thermoplastischen Kunststoffe mit Faserverstärkung noch so unzureichend, daß bei der Herstellung von genügend druckfesten Behältern aus derartigen Materialien praktisch keinerlei Vorteile zu erzielen gewesen wären. Insbesondere hätte man für eine ausreichende Druckfestigkeit nur relativ teure und schwere Kunststoffe und überdies nur mit einer relativ großen Wandstärke verwenden können, so daß vor allem aufgrund der größeren Wandstärke keinerlei Gewichtsvorteile mehr gegenüber entsprechenden Druckbehältern aus Stahl oder anderen Metallen bestanden. Auch die Kosten für entsprechende Massen an thermoplastischem, faserverstärktem Material sind entsprechend hoch, so daß sich derartige Materialien jedenfalls für Druckbehälter bisher nicht durchgesetzt haben.

Die Erfinder des vorliegenden Anmeldungsgegenstandes haben jedoch herausgefunden, daß sich die Wandstärken des thermoplastischen Materials für Druckbehälter beträchtlich reduzieren lassen, wenn man das thermoplastische Material mit mindestens 10 Vol.-% an Fasern füllt, die im Durchschnitt eine Länge von mindestens 50 mm haben. Die für Druckbehälter vor allem wichtige Zugfestigkeit des thermoplastischen Materials wird offenbar durch die im Durchschnitt relativ langen Fasern beträchtlich gesteigert. Gleichzeitig ist die Herstellung eines wesentlichen Teiles des Druckbehälters in Form eines Rohres besonders einfach, da Rohre in relativ großen Längen extrudiert werden können und dann lediglich auf eine gewünschte Länge abgeschnitten zu werden brauchen, um als zylindrischer Hauptteil eines Druckbehälters Verwendung zu finden.

Die auf die beiden Enden eines solchen Rohrabschnittes aufzusetzenden Deckel bestehen vorzugsweise ebenfalls aus einem faserverstärkten, thermoplastischen Material, vorzugsweise weisen sie dasselbe thermoplastische Matrixmaterial auf wie das Rohr. Dies ermöglicht ein sehr einfaches und sicheres Verschweißen von Deckel und Rohr. Im übrigen sind die Merkmale bevorzugter Ausführungsformen des erfindungsgemäßen Druckbehälters in den abhängigen Ansprüchen 2 bis 13 wiedergegeben. Die erfindungsgemäßen Druckbehälter aus Faserkunststoffverbunden stehen herkömmlichen Stahl - oder Aluminiumbehältern hinsichtlich drucktechnischer Eignung in nichts nach, bieten darüberhinaus jedoch entscheidende Vorteile, wie geringes Gewicht und erhöhte Korrosionsbeständigkeit. Durch geeignete Kombination eines Kunststoffes als Matrix mit hochfesten Fasern als Verstärkung gelangt man zu einem vielseitigen Werkstoff, wobei sich durch die Wahl eines geeigneten Verstärkungsaufbaues maßgeschneiderte Werkstoffeigenschaften einstellen lassen.

So hat es sich zum Beispiel als für Druckbehälter besonders günstig erwiesen, wenn die Ausrichtung der Fasern innerhalb der thermoplastischen Matrix nicht vollständig zufällig ist, sondern wenn eine bestimmte Vorzugsrichtung ausgebildet wird, die im Mittel eine stärkere Ausrichtung in Umfangsrichtung zeigt. Besonders bevorzugt ist eine Ausgestaltung des erfindungsgemäßen Druckbehälters, bei welchem das den Hauptteil des Druckbehälters bildende Rohr aus einem faserverstärkten Kunststoff besteht, bei welchem die Fasern, gemittelt über einen Quadranten zwischen 0° und 90° relativ zu der Rohrachse oder einer Parallelen hierzu einen Ausrichtungswinkel im Bereich von 45° bis 65°, vorzugsweise von 50° bis 60° und insbesondere etwa 54° bis 55° ergibt.

Als Matrixwerkstoffe eignen sich zum Beispiel Polyethylen, Polypropylen, Polyamid, Polyketon, Polyvinylchlorid, Poly-4-methylpenten-1, Polyacetal, Polymethylmethacrylat, Polystyrol, Styrol/Acrylnitril-Copolymer, Polycarbonat und/oder Acrynitrilbutadienstyrol, wobei diese Aufzählung nicht vollständig ist.

Geeignete Fasern sind Glasfasern, Aramidfasern, Kohlenstoffasern, Metallfasern, Keramikfasern und/oder Polymerfasern oder auch Naturfasern.

Zweckmäßigerweise hat das Rohr einen kreisförmigen Querschnitt. Würde man nämlich einen nicht kreisförmigen Querschnitt für das Rohr vorsehen, so würde sich die Wand eines aus einem solchen Rohr hergestellten Druckbehälters bei Druckbeaufschlagung mehr oder weniger stark verformen in Richtung des zylindrischen Querschnittes, da die Zylinderform bei gegebenem Rohrumfang das größte Volumen bietet.

Entsprechend sind auch die das Rohr an beiden Enden verschließenden Deckel kreisförmig ausgebildet, können dabei jedoch sowohl nach innen als auch nach außen gewölbt sein. Besonders vorteilhaft ist eine Ausführungsform, bei welcher der Deckel einen Rohransatz aufweist, dessen Durchmesser auf den Querschnitt des den Hauptteil des Druckbehälters bildenden Rohres angepaßt ist, vorzugsweise in der Weise, daß der Rohransatz teleskopartig , gegebenenfalls auch unter Presspassung in das den Hauptteil des Druckbehälters bildende Rohr einsteckbar ist. Die Überlappungslänge des Rohransatzes mit dem Rohr beträgt dabei vorzugsweise zwischen 5 und 100 mm und der Rohransatz wird mit dem Rohrende, in welches er eingesteckt ist, möglichst großflächig verschweißt. Dies kann zum Beispiel durch Reibschweißen, Spiegelschweißen ,Ultraschallschweißen oder dergleichen geschehen.

Alternativ können Deckel und Rohr selbstverständlich auch miteinander verklebt werden. Ebenso könnte ein Deckel mit Rohransatz auch ein Gewinde an dem Rohransatz oder eine Art Bajonettverschluß aufweisen mit entsprechenden Gegenstücken an dem den Hauptteil des Druckbehälters bildenden Rohr. In diesem Fall ist allerdings das zusätzliche Anordnen einer Dichtung zwischen zwei einander berührenden und vollständig umlaufenden Flächen des Deckels und des Rohres zweckmäßig oder erforderlich.

Die Deckel können Spritzguß- oder Preßteile sein und bestehen vorzugsweise, wenn auch n icht zwingend erforderlich, ebenfalls aus einem faserverstärkten Kunststoff, wobei allerdings die Fasern in den Deckeln auch eine geringere Länge haben können, zum Beispiel im Mittel zwischen 0 und 30 mm, und wobei die Deckel vorzugsweise eine größere Wandstärke haben und/oder an ihrer Innen- oder Außenfläche quer über die Deckelflächen verlaufende Verstärkungsrippen aufweisen.

Auch Öffnungen oder Ansatzstücke für das Be- und Entladen des Behälters sind vorzugsweise an einem der beiden Deckel des Druckbehälters vorgesehen. Wenn ein Druckbehälter aufrecht stehend verwendet werden soll, so ist es zweckmäßig, entsprechende Standfüße als Fortsätze an einem Deckel vorzusehen oder aber an der Bodenseite des Behälters einen einwärts gewölbten Deckel zu verwenden, so daß dessen Rand einen sicheren Stand für den Behälter insgesamt bietet.

Hinsichtlich des entsprechenden Verfahrens zur Herstellung eines Druckbehälters für die Speicherung fester, flüssiger und/oder gasförmiger Medien unter einem Betriebsdruck oberhalb des Atmosphärendruckes wird die der Erfindung zugrundeliegende Aufgabe gelöst durch die folgenden Schritten:
a) Herstellen eines Rohres aus einem Faserkunststoffverbund mit thermoplastischer Matrix, bei welchem die verwendeten Fasern mindestens 10 Vol.-% des Verbundmaterials ausmachen und eine durchschnittliche Länge von mehr als 50 mm, haben
b) Ablängen bzw. Abschneiden eines Rohrstückes gewünschter Länge,
c) Herstellen von Kunststoffdeckeln, welche die Enden des Rohres verschließen können und
d) Verbinden des Rohres mit den Kunststoffdeckeln derart, daß sie die Enden des Rohres dicht verschließen.

Das Rohr kann zum Beispiel durch ein Wickel- und/oder Pullwinding-Verfahren hergestellt werden. Weiterhin ist es möglich, das Rohr zunächst mit Fasern in Zufallsorientierung herzustellen und anschließend in einem weiteren Extrudierprozß das Rohr nochmals aufzuweiten, gegebenenfalls unter Erhitzung, wobei durch die Aufweitung die in der Wand des Rohres zufallsorientiert angeordneten Fasern bevorzugt in Umfangsrichtung ausgerichtet werden bzw. eine stärkere Komponente in Umfangsrichtung erhalten, um auf diese Weise die Materialeigenschaften des Rohres für die Verwendung als Wand eines Druckbehälters zu optimieren. Die relative Aufweitung des Rohres sollte dabei zwischen 10% und 50%, vorzugsweise 20% bis 30% betragen.

Weitere Aspekte der Herstellung ergeben sich aus dem abhängigen Anspruch 14, sowie auch aus den Merkmalen der fertigen Druckbehälter, wie sie durch die Ansprüche 1 bis 13 definiert werden.

Durch den Einsatz eines Rohres aus Faserkunststoffverbund mit thermoplastischer Matrix mit langen, vorzugsweise ausgerichteten Fasern wird erreicht, daß das Rohr nur ein geringes Eigengewicht aufweist. Durch den Einsatz des beschriebenen Faserkunststoffverbundes hält der Behälter den mechanischen Beanspruchungen stand und dient, z. B. mit einer inneren, faserfreien oder faserarmen Schicht, zudem als Diffusionssperre. Der Einsatz einer diffusionsdichten Hüllschicht entfällt damit. Weiterhin sind die Materialien wenig korrosionsanfällig.

Durch Herstellung des Rohres aus Faserkunststoffverbund in unterschiedlichen Längen und entsprechenden Verschluß durch die beiden Deckel können auf einfachste Weise Druckbehälter mit unterschiedlichem Fassungsvermögen gefertigt werden.

Rohr und Deckel können mit guten Außenoberflächen und optisch sehr ansprechend gefertigt werden, so daß eine nachträgliche Ummantelung oder Bearbeitung entfallen kann.

Da thermoplastisch basierte Matrixsysteme zum Einsatz kommen, können die erfindungsgemäßen Behälter, beispielsweise durch Zerkleinerung und Wiedereinschmelzen sehr gut recycliert werden.

In weiterer Ausgestaltung kann das Rohr mit einer Öffnung im zylindrischen Teil zum Be- und Entladen des Behälters versehen sein. Diese Gestaltung hat den Vorteil, daß ein Öffnngseinsatz bzw -Stutzen in Form eines Einlegeteils vor der Montage der Deckel einfach von innen eingesetzt werden kann. Die Gestaltung hat beispielsweise den Vorteil, daß bei liegend montierten Behältern durch diese Öffnung flüssige Medien vollständig abgelassen werden können.

In weiterer Ausgestaltung kann das Rohr mehrteilig ausgebildet sein. Bei der mehrteiligen Ausgestaltung der Hüllschicht muß jedoch sichergestellt werden, daß die einzelnen Teile auf geeignete Weise gasdicht miteinander verbunden werden.

Die mehrteilige Gestaltung hat beispielsweise den Vorteil, daß ein Zwischenteil im Rohrbereich eingefügt werden kann, in dem Ablaßöffnungen integriert sind.

In weiterer Ausgestaltung kann das Rohr mit einem nach innen gewölbten Deckel ausgebildet sein. Bei der derartigen Ausgestaltung des Deckels hat beispielsweise den Vorteil, daß der Behälter einen sicheren Stand hat, ohne daß zusätzliche Standflächen angebracht werden müssen.

Durch das erfindungsgemäße Verfahren können Behälter geschaffen werden, die die vorstehend beschriebenen vorteilhaften Wirkungen, Funktionen und Effekte aufweisen, auf die vollinhaltlich Bezug genommen und hiermit verwiesen wird.

Das Rohr kann beispielsweise zunächst in Form einer langen Röhre hergestellt werden. Von der entstandenen Röhre können die einzelnen Rohe in der gewünschten Länge abgetrennt werden. Bevorzugte Verfahren zur Herstellung des Rohres sind unter anderem - jedoch nicht ausschließlich - das Wickel- oder Pullwinding-Verfahren.

Bevorzugte Verfahren zur Herstellung der Deckel sind unter anderem - jedoch nicht ausschließlich - das Spritzguß- oder Preßverfahren.

Das entsprechend abgelängte Rohr wird danach mit den beiden Deckeln verbunden. Bevorzugte Verfahren zur Verbindung der Deckel mit dem Rohr sind unter anderem - jedoch nicht ausschließlich - Schweißen und/oder Kleben und/oder Formschluss, gegebenenfalls unter Anordnen bzw. Einklemmen einer vorzugsweise eleastischen Dichtung zwischen den Dichtungsflächen des Deckels und des Rohres.

Erfindungsgemäß kann der Betriebsdruck der im Behälter gespeicherten Medien weniger als 25 Mpa (250 bar), vorzugsweise 0,1 bis 6 Mpa (1 bis 60 bar) betragen. Der entsprechende Berstdruck entspricht dabei dem mit 1,1 bis 4 multiplizierten Wert des jeweiligen Betriebsdruckes.

Die zu speichernden Medien können Luft, Sauerstoff, Stickstoff, Kohlendioxid, Propan, Erdgas, Wasserstoff oder aber andere technische Gase oder Flüssigkeiten oder dergleichen sein. Die Erfindung ist auf keine besondere Art von Speichergasen und/oder Flüssigkeiten beschränkt.

Gemäß einem weiteren Aspekt der Erfindung kann ein wie vorstehend beschriebener Behälter, der insbesondere nach einem erfindungsgemäßen Verfahren hergestellt wurde, zu unterschiedlichen Zwecken verwendet werden. Beispiel für mögliche Verwendungsformen sind in beispielhafter und nicht abschließender Aufzählung die Verwendung als Druckgefäß für Rettungssysteme (zum Beispiel Airbag), als Druckgefäß für Brenngase oder als Drucklufttank

Die Erfindung wird im folgenden anhand von Ausführungsbeispielen unter Bezugnahme auf die beiliegenden Zeichnungen näher beschrieben. Es zeigen:
- Figur 1: einen schematischen Querschnitt des erfindungsgemäßen Behälters gemäß einer ersten Ausführungsform mit Be- und Entladeöffnungen in beiden Deckeln sowie im zylindrischen Behälterteil,
- Figur 2: eine schematische Querschnittsansicht des erfindungsgemäßen Behälters gemäß einer zweiten Ausführungsform mit zentrisch angeordneten Be- und Entladeöffnungen in einem Deckel,
- Figur 3: eine schematische Querschnittsansicht des erfindungsgemäßen Behälters gemäß einer dritten Ausführungsform mit zusätzlichen Be- und Entladeöffnungen im Zylinderteil,
- Figur 4: eine schematische Querschnittsansicht des erfindungsgemäßen Behälters gemäß einer vierten Ausführungsform mit nach innen gewölbtem Behälterboden.
- Figur 5: einen erfindungsgemäßen Druckbehälter mit einwärts gewendeten Rohrenden,
- Figur 6: einen in eine Behälteröffnung eingesetzten Gewindestutzen 11,
- Figur 7: eine ähnliche Detailansicht wie Figur 6 mit einem Öffnungsstutzen bzw. Anschluß, der ein integriertes Gewinde 13 hat, und
- Figur 8: eine Schnittansicht sowie eine Draufsicht auf einen Behälterdeckel 3 mit einer Sollbruchstelle 14.

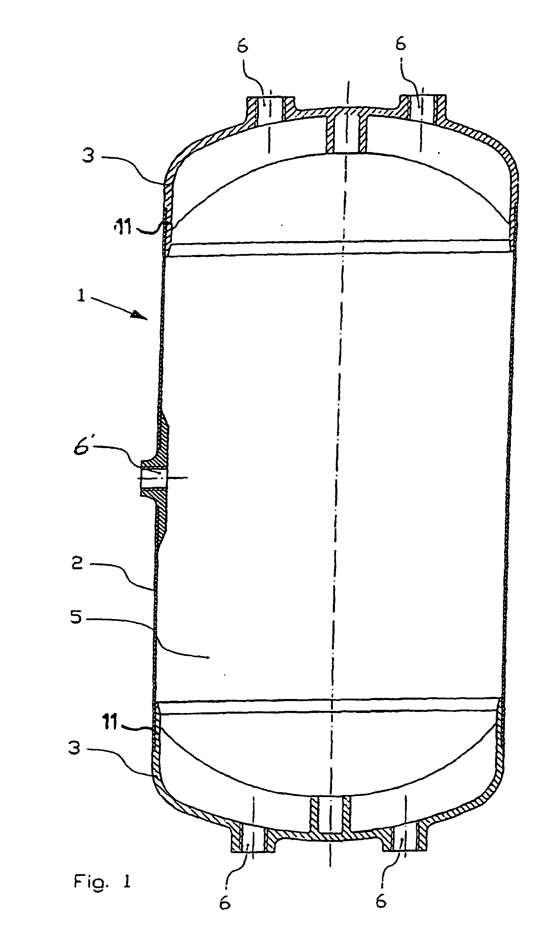

In Figur 1 ist ein Behälter 1 zur Speicherung eines Druckgases schematisch im Querschnitt dargestellt. Der Behälter 1 ist aus einem Rohr 2 aus Faserkunststoffverbund und zwei Deckeln 3 aus Faserkunststoffverbund derart miteinander verbunden, daß sie einen zur Speicherung des Gases vorgesehenen Hohlraum 5 umschließen. Das Rohr 2, das an den Enden jeweils mit einem Dekkel 3 verschlossen ist, kann über die Anschlüsse 6 Be und/oder Entladen werden. Im Rohr 2 befindet sich ein weiterer Anschluß 6' zum Be- und/oder Entladen des Behälters.

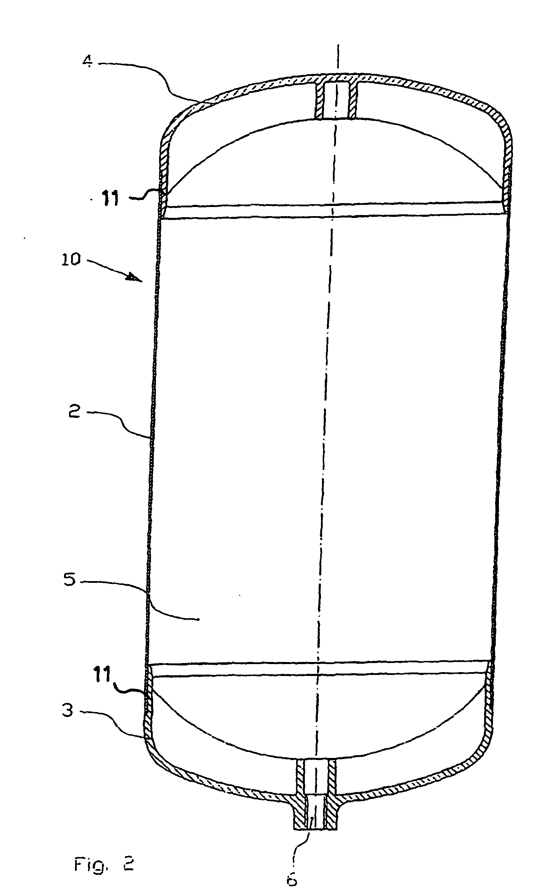

In Figur 2 ist ein schematischer Querschnitt des erfindungsgemäßen Behälters gemäß einer zweiten Ausführungsform dargestellt, wobei der Behälter 10 aus einem Rohr 2 aus Faserkunststoffverbund und zwei Deckeln 3 und 4 aus Faserkunststoffverbund besteht, die derart miteinander verbunden sind, daß sie einen zur Speicherung des Gases vorgesehenen Hohlraum 5 umschließen. Das Rohr 2, das an den Enden jeweils mit einem Deckel 3 und 4 verschlossen ist, kann über den zentrisch angeordneten Anschluß 6 Be- und/oder Entladen werden.

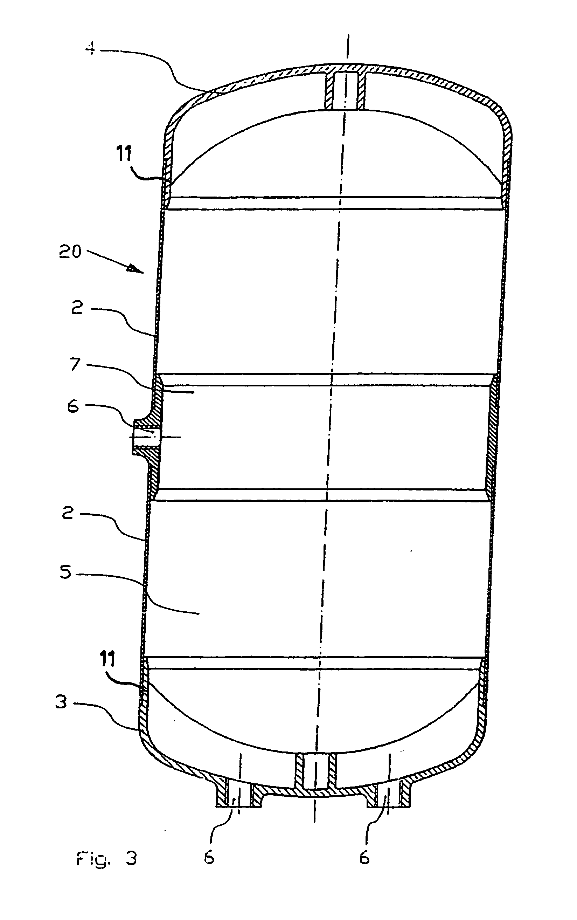

In Figur 3 ist ein schematischer Querschnitt des erfindungsgemäßen Behälters gemäß einer dritten Ausführungsform dargestellt, wobei der Behälter 20 aus einem zweiteilig ausgebildeten Rohr 2 ausgestaltet ist. Ein Zwischenteil 7 mit einem Anschluß 6 zum Be- und/oder Entladen ist mit dem Rohr 2 verbunden. Zwei Deckel 3 und 4 sind derart mit dem Rohr 2 und dem Zwischenteil 7 verbunden, daß sie einen zur Speicherung des Gases vorgesehenen Hohlraum 5 umschließen. Weitere Anschlüsse 6 zum Be- und/oder Entladen des Behälters befinden sich in dem Deckel 3.

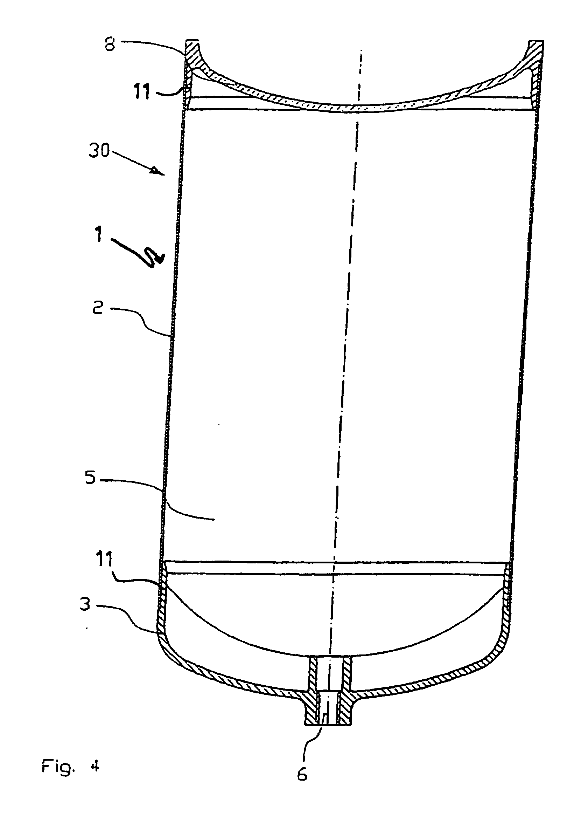

In Figur 4 ist eine schematische Querschnittsansicht des erfindungsgemäßen Behälters gemäß einer vierten Ausführungsform dargestellt, wobei der Behälter 30 aus einem Rohr 2 aus Faserkunststoffverbund und zwei Deckeln 3 und 8 aus Faserkunststoffverbund besteht, die derart - miteinander verbunden sind, daß sie einen zur Speicherung des Gases vorgesehenen Hohlraum 5umschließen. Das Rohr 2, das an den Enden jeweils mit einem Deckel 3 und 8 verschlossen ist, kann über den zentrisch angeordneten Anschluß 6 Be- und/oder Entladen werden. Der Deckel 8 ist mit nach innen gewölbtem Behälterboden ausgestaltet.

Wie man in den Figuren 1 bis 3 außerdem erkennt, weisen die Deckel 3, 4 jeweils einen Rohransatz 11 auf, dessen Außendurchmesser ziemlich exakt auf den Innendurchmesser des Rohres 2 abgestimmt ist und so teleskopartig in ein Ende des Rohres 2 eingeschoben werden kann. Dieser Rohransatz 11 erweitert sich jenseits des einschiebbaren Teiles sprungartig auf einen größeren Durchmesser, vorzugsweise auf den Außendurchmesser des Rohres 2, so daß sich eine Schulter bildet, die auf der Stirnseite des Rohres aufliegt, wobei die Außenwand des Deckels in diesem Bereich bündig mit der Außenfläche des Rohres abschließt. Der in das Rohr 2 hineinragende Rohransatz 11 des Deckels hat eine axiale Länge von typischerweise 5 - 100 mm, vorzugsweise mindestens 50 mm, um eine möglichst großflächige Klebe- oder Schweißverbindung zwischen dem Rohransatz 11 bzw. Deckel 3, 4 und dem Rohr 2 herstellen zu können.

Figur 4 zeigt die Variante mit einem auf einer Seite einwärts gewölbten Deckel, so daß der äußere Rand dieses Deckels 8 als Standfläche dienen kann, der Druckbehälter 1 insgesamt also in einer gegenüber 4 um 180° verdrehten Position auf eine Unterlage bzw. dem Boden gestellt wird.

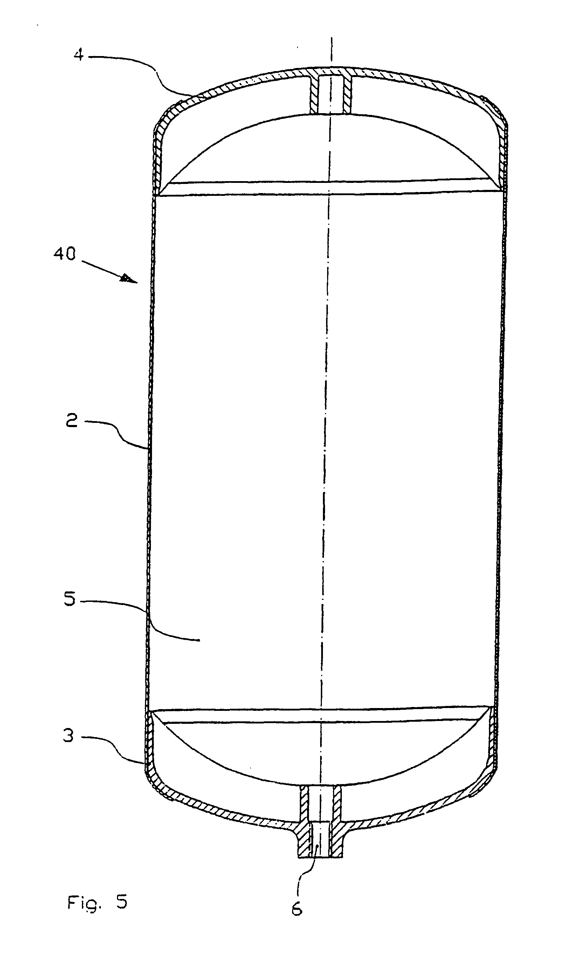

Figur 5 zeigt eine weitere Variante der Verbindung zwischen einem Rohr 2 und Deckeln 3, 4, wobei in diesem Fall das Rohr 2 mit einwärts umgebogenen freien Stirnseiten versehen ist, die man zum Beispiel durch thermische Verformung herstellen kann und wobei die Deckel von innen gegen die einwärts ragenden Abschnitte des Rohres 2 gedrückt werden und wobei dann in ähnlicher Weise eine Verschweißung oder Verklebung zwischen der Außenwand des Deckels 3, 4 und der Innenwand des Rohres 2 erfolgt. Dabei können die Deckel vor dem Ausbilden der einwärts gewendeten Rohrenden in das Rohr eingebracht werden, sie können jedoch auch nachträglich eingeschoben werden, wenn durch einseitiges Zusammenpressen bzw. Ovalisieren des Rohres 2 der Querschnitt elliptisch verformt wird, so daß die Deckel 3, 4 mit einer Kante voran in das Rohr eingeschoben und dann in die gewünschte Position gedreht werden können. Eine gewisse elastische Verformbarkeit des Rohres und/oder der Deckel ist dabei von Vorteil.

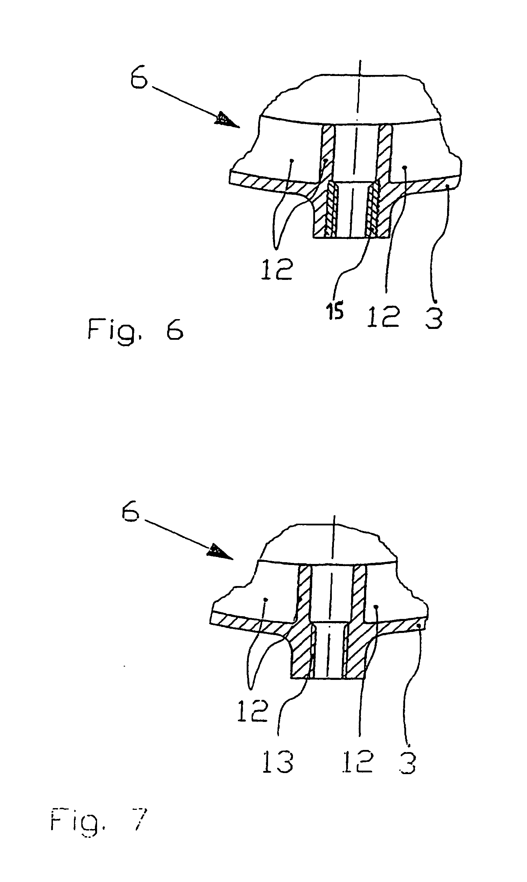

Die Figuren 6 und 7 zeigen in Detailansichten die Ausbildung eines Anschlußstutzens entweder mit einem eingesetzten Gewindeteil 15 oder mit einem in den Stutzen eingeformten Gewinde 13. Zusätzlich sind in Längs- und Querrrichtung (d.h. parallel zur Papierebene und senkrecht hierzu) verlaufende Rippen 12 zur Verstärkung des Deckels 3 bzw. 4 vorgesehen.

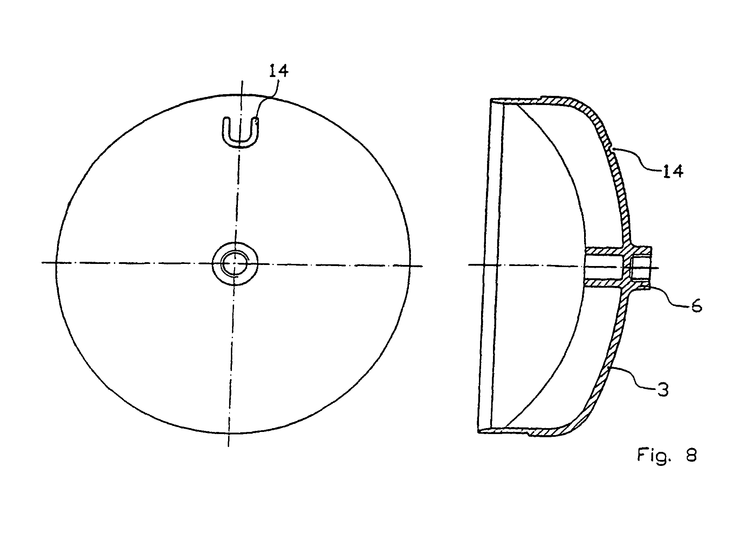

In Figur 8 ist schematisch noch eine Sollbruchstelle 14 in Form einer U-förmigen, nutartigen Vertiefung in dem Deckel dargestellt, die sicherstellen soll, daß im Falle eines womöglich auftretenden Überdrucks in dem Behälter das Medium kontrolliert durch die Sollbruchstelle entweicht, ohne das der Behälter insgesamt explodiert.

## Patentansprüche

1. Druckbehälter (1, 10, 20, 30, 40) zur Speicherung fester, flüssiger und/oder gasförmiger Medien unter einem Betriebsdruck oberhalb des Atmosphärendrucks, wobei der Behälter im Wesentlichen aus einem einlagigen Rohr (3) besteht, welches aus faserverstärktem, thermoplastischem Kunststoff hergestellt ist und welches mit Deckeln versehen ist, die die offenen Stirnseiten des Rohres verschließen, so dass das einlagige Rohr mit den Deckeln einen zur Speicherung des Mediums vorgesehenen Hohlraum umschließt, wobei mindestens ein Anschluss (6, 6') zum Be- und/oder Entladen vorgesehen ist, **dadurch gekennzeichnet, dass** das thermoplastische Material, aus welchem das einlagige Rohr hergestellt ist, zu mehr als 10 Volumenprozent aus Fasern mit einer durchschnittlichen Faserlänge von mehr als 50 mm besteht.

2. Druckbehälter nach Anspruch 1 **dadurch gekennzeichnet, daß** die Deckel ihrerseits aus einem faserverstärkten Kunststoff bestehen, wobei das Deckelmaterial Fasern enthält, deren durchschnittliche Länge im Bereich zwischen 1 und 30 mm liegt.

3. Druckbehälter nach Anspruch 1 oder 2, **dadurch gekennzeichnet, daß** er mehrere, getrennte Rohrabschnitte aufweist, die jeweils durch Zwischenteile miteinander verbunden sind.

4. Druckbehälter nach einem der Ansprüche 1 bis 3, **dadurch gekennzeichnet, daß** der Matrixwerkstoff des Behälters aus einem thermoplastischen Kunststoff besteht, zum Beispiel aus Polyethylen (PE), Polypropylen (PP), Polyamid (PA), Polyketon (PK), Polyvinylchlorid (PVC), Poly-4-methylpenten-1 (PMP), Polyacetal (Polyoxymethylen) (POM), Polymethylmethacrylat (PMMA), Polystyrol (PS), Styrol/Acrylnitril-Copolymer (SAN), Polycarbonat (PC) und/oder Acrynitrilbutadienstyrol (ABS).

5. Druckbehälter nach einem der Ansprüche 1 bis 4, **dadurch gekennzeichnet, daß** als Verstärkung organische oder anorganische Fasern, vorzugsweise Glasfasern, Aramidfasem, Kohlenstoffasern, Metallfasern, Keramikfasern und/oder Polymerfasern eingesetzt werden.

6. Druckbehälter nach einem der Ansprüche 1 bis 5, **dadurch gekennzeichnet, daß** das Rohr einen kreisförmigen Querschnitt hat.

7. Druckbehälter nach einem der Ansprüche 1 bis 6, **dadurch gekennzeichnet, daß** mindestens einer der Deckel einen rohrförmigen Ansatz aufweist, der teleskopartig mit einem der Enden des Rohres zusammensteckbar ist.

8. Druckbehälter nach Anspruch 7, **dadurch gekennzeichnet, daß** der Außendurchmesser des Rohransatzes dem Innendurchmesser des Rohres (2) entspricht.

9. Druckbehälter nach einem der Ansprüche 1 bis 8, **dadurch gekennzeichnet daß** die Fasem des Rohres Im Durchschnitt mehr in Umfangsrichtung ausgerichtet sind als in axialer Richtung.

10. Druckbehälter nach Anspruch 9, **dadurch gekennzeichnet, daß** der bezüglich einer Parallelen zur Rohrachse in einem Quadranten zwischen 0 und 90° gemittelte Ausrichtungswinkel der Fasern zwischen 45° und 65°, vorzugsweise zwischen 50° und 60° liegt.

11. Druckbehälter nach einem der Ansprüche 1 bis 10, **dadurch gekennzeichnet, daß** die Wandstärke des Rohres im Bereich zwischen 1 mm und 10 mm liegt.

12. Druckbehälter nach einem der Ansprüche 1 bis 11, **dadurch gekennzeichnet, daß** er für Betriebsdrücke unterhalb von 25 Mpa (250 bar), vorzugsweise für Betriebsdrücke unterhalb von 6 Mpa (60 bar) ausgelegt ist.

13. Verfahren zur Herstellung eines einlagigen Druckbehälters, **gekennzeichnet durch** die folgenden Schritte:
a) Herstellen eines Rohres aus Faserkunststoffverbund mit thermoplastischer Matrix und Fasern mit einer durchschnittlichen Länge von mehr als 50 mm,
b) Ablängen des Rohres,
c) Herstellen von Kunststoffdeckeln zum Verschließen der offenen Stirnseiten des Rohres,
d) dichtes Verbinden des Rohres mit den Deckeln, wobei entweder in dem Rohr oder in den Deckeln jeweils ein Anschluß zum Be- oder Entladen des **durch** Rohr und Deckel gebildeten Hohlraumes vorgesehen werden.

14. Verfahren nach Anspruch 13, **dadurch gekennzeichnet, daß** mehrere kurze Rohrabschnitte über Zwischenstücke zu einem längeren Rohr verbunden werden, wobei die verbleibenden offenen Enden des so hergestellten längeren Rohres durch Deckel verschlossen werden.

15. Verfahren nach Anspruch 13 oder 14, **dadurch gekennzeichnet, daß** das Rohr durch ein Wickel bzw. Pullwinding-Verfahren hergestellt wird.

16. Verfahren nach einem der Ansprüche 13 bis 15, **dadurch gekennzeichnet, daß** die Deckel durch ein Spritzguß und/oder Preßverfahren hergestellt werden.

17. Verfahren nach einem der Ansprüche 13 bis 16, **dadurch gekennzeichnet, daß** die Rohre und die Deckel, sowie gegebenenfalls die Zwischenstücke mit den Rohren durch Schweißen und/oder Kleben und/oder durch Formschluß und gegebenenfalls zusätzliches Vorsehen einer Dichtung auf den Kontaktflächen der verschiedenen Teile miteinander verbunden werden

## Claims

1. Pressure vessel (1, 10, 20, 30, 40) for storage of solid, liquid and/or gaseous media under an operating pressure above atmospheric pressure, wherein the container is composed essentially of a single-layer tube (3), which is manufactured from fibre-reinforced thermoplastic material and which is provided with lids which seal the open end faces of the tube, so that the single-layer tube and the lids enclose a hollow space for storage of the medium, wherein at least one connector (6, 6') is provided for loading and/or unloading, **characterised in that** the thermoplastic material from which the single-layer tube is manufactured consists of up to more than 10 per cent by volume of fibres with an average length of more than 50 mm.

2. Pressure vessel according to Claim 1, **characterised in that** the lids are for their part composed of a fibre-reinforced plastic, wherein the lid material contains fibres, the average length of which is in the range of between 1 and 30 mm.

3. Pressure vessel according to Claim 1 or 2, **characterised in that** it has a plurality of separate tube sections which are joined to one another respectively by intermediate pieces.

4. Pressure vessel according to one of Claims 1 to 3, **characterised in that** the matrix material of the container is composed of a thermoplastic material, for example polyethylene (PE), polypropylene (PP), polyamide (PA), polyketone (PK), polyvinyl chloride (PVC) , poly-4-methylpentene-1 (PMP), polyacetal (polyoxymethylene) (POM), polymethyl methacrylate (PMMA), polystyrene (PS), styrene/acrylnitrile copolymer (SAN), polycarbonate (PC) and/or acrylnitrile butadiene styrene (ABS).

5. Pressure vessel according to one of Claims 1 to 4, **characterised in that** organic or inorganic fibres, preferably glass fibres, aramide fibres, carbon fibres, metal fibres, ceramic fibres and/or polymer fibres are used as reinforcement.

6. Pressure vessel according to one of Claims 1 to 5, **characterised in that** the tube has a circular cross-section.

7. Pressure vessel according to one of claims 1 to 6, **characterised in that** at least one of the lids is provided with a tubular connector which can be joined in a telescopic manner to one of the ends of the tube.

8. Pressure vessel according to claim 7, **characterised in that** the external diameter of the tube connector matches the internal diameter of the tube (2).

9. Pressure vessel according to one of claims 1 to 8, **characterised in that** the fibres of the tube are on average more strongly oriented in the peripheral direction than in the axial direction.

10. Pressure vessel according to claim 9, **characterised in that** the angle of orientation of the fibres determined parallel with respect to the tube axis in a quadrant between 0 and 90° is between 45° and 65°, preferably between 50° and 60°.

11. Pressure vessel according to one of claims 1 to 10, **characterised in that** the wall thickness of the tube is in the range between 1 mm and 10 mm.

12. Pressure vessel according to one of claims 1 to 11, **characterised in that** it is set up for operating pressures below 25 Mpa (250 bar), preferably for operating pressures below 6 Mpa (60 bar).

13. Method for manufacturing a single-layer pressure vessel, **characterised by** the following steps:
a) Manufacture of a tube from fibre-plastics composite with a thermoplastic matrix and fibres with an average length of more than 50 mm,
b) Cutting to length of the tube,
c) Manufacture of plastics lids for sealing the open end faces of the tube,
d) Sealing of the tube with the lids, wherein a connector for loading or unloading the hollow space formed by the tube and lids is provided respectively either in the tube or in the lids.

14. Method according to claim 13, **characterised in that** a plurality of short tube sections are joined together via intermediate pieces to form a longer tube, wherein the remaining open ends of the long tube manufactured in this way are sealed with lids.

15. Method according to claim 13 or claim 14, **characterised in that** the tube is manufactured by means of a wrapping or pull-winding method.

16. Method according to one of claims 13 to 15, **characterised in that** the lids are manufactured by means of an injection-moulding and/or pressing method.

17. Method according to one of claims 13 to 16, **characterised in that** the tubes and the lids, possibly also the intermediate pieces, are joined one to another by welding and/or gluing and/or by form fitting and possibly with additional provision of a seal on the contact surfaces of the different parts.

## Revendications

1. Récipient sous pression (1, 10, 20, 30, 40) destiné à stocker des matières solides, liquides et/ou gazeuses à une pression de fonctionnement supérieure à la pression atmosphérique, le récipient étant sensiblement constitué d'un tube monocouche (3) qui est fabriqué à partir d'une matière thermoplastique renforcée par des fibres et qui est doté de couvercles qui ferment les faces frontales ouvertes du tube de sorte que le tube monocouche définit avec les couvercles un espace creux destiné à stocker la matière, au moins un raccord (6, 6') étant prévu pour le remplissage et la purge,
**caractérisé en ce que** la matière thermoplastique, à partir de laquelle le tube monocouche est fabriqué, est constituée de plus de 10% en volume de fibres de longueur moyenne de plus de 50 mm.

2. Récipient sous pression selon la revendication 1, **caractérisé en ce que** les couvercles sont pour leur part en matière plastique renforcée par des fibres, la matière du couvercle contenant des fibres dont la longueur moyenne est comprise entre 1 et 30 mm.

3. Récipient sous pression selon la revendication 1 ou 2, **caractérisé en ce qu'**il comporte plusieurs sections de tube séparées qui sont reliées par des pièces intermédiaires.

4. Récipient sous pression selon l'une des revendications 1 à 3, **caractérisé en ce que** la matière de la matrice du récipient est en matière thermoplastique, par exemple en polyéthylène (PE), en polypropylène (PP), en polyamide (PA), en polycétone (PK), en chlorure de polyvinyle (PVC), en poly-4-méthylpentène-1 (PMP), en polyacétal (polyoxyméthylène) (POM), en polyméthylméthacrylate (PMMA), en polystyrène (PS), en copolymère styrène/acrynitrile (SAN), en polycarbonate (PC) et/ou en Acrylonitrile-butadiène-styrène (ABS).

5. Récipient sous pression selon l'une des revendications 1 à 4, **caractérisé en ce qu'**il est utilisé comme renforcement des fibres organiques et minérales, avantageusement des fibres de verre, des fibres d'aramide, des fibres de carbone, des fibres métalliques, des fibres de céramique et/ou des fibres de polymères.

6. Récipient sous pression selon l'une des revendications 1 à 5, **caractérisé en ce que** le tube a une section circulaire.

7. Récipient sous pression selon l'une des revendications 1 à 6, **caractérisé en ce que** au moins l'un des couvercles comporte une pièce rapportée de forme tubulaire qui peut être escamotée de façon télescopique à l'une des extrémités du tube.

8. Récipient sous pression selon la revendication 7, **caractérisé en ce que** le diamètre extérieur de la pièce rapportée tubulaire correspond au diamètre intérieur du tube (2).

9. Récipient sous pression selon l'une des revendications 1 à 8, **caractérisé en ce que** les fibres du tube sont orientées en moyenne davantage dans la direction périphérique que dans la direction axiale.

10. Récipient sous pression selon la revendication 9, **caractérisé en ce que** l'angle d'orientation des fibres, déterminé en moyenne par rapport à une parallèle à l'axe du tube dans un quadrant situé entre 0 et 90°, est compris entre 45° et 65°, avantageusement entre 50° et 60°.

11. Récipient sous pression selon l'une des revendications 1 à 10, **caractérisé en ce que** l'épaisseur du tube est comprise entre 1 mm et 10 mm.

12. Récipient sous pression selon l'une des revendications 1 à 11, **caractérisé en ce qu'**il est étudié pour des pressions de fonctionnement inférieure 25 MPa (250 bar), avantageusement pour des pressions de fonctionnement inférieure à 6 MPa (60 bar).

13. Procédé de fabrication d'un récipient monocouche sous pression, **caractérisé par** les étapes suivantes consistant à :
a) fabriquer un tube à partir d'un composite de matière plastique et de fibres comprenant une matrice thermoplastique et des fibres d'une longueur moyenne de plus de 60 mm,
b) tronçonner le tube,
c) réaliser des couvercles en matière plastique destinés à fermer les faces frontales ouvertes du tube, et
d) relier de façon étanche le tube avec les couvercles, un raccord de remplissage ou de purge de l'espace creux formé par le tube et les couvercles étant à chaque fois prévu soit dans le tube, soit dans les couvercles.

14. Procédé selon la revendication 13, **caractérisé en ce que** plusieurs courtes sections tubulaires sont reliées par des pièces intermédiaires pour former un tube plus long, les extrémités ouvertes restantes du tube plus long ainsi fabriqué étant fermées par des couvercles.

15. Procédé selon la revendication 13 ou 14, **caractérisé en ce que** le tube est fabriqué par un procédé d'enroulement avec traction resp. pullwinding.

16. Procédé selon l'une des revendications 13 à 15, **caractérisé en ce que** les couvercles sont fabriqués par un procédé de pressage et/ou de moulage par injection.

17. Procédé selon l'une des revendications 13 à 16, **caractérisé en ce que** le tube et les couvercles, ainsi que éventuellement les pièces intermédiaires avec les tubes, sont reliés par soudage et/ou collage et/ou verrouillage de forme, le cas échéant avec en plus une garniture d'étanchéité sur les surfaces de contact des différentes pièces.
